# EUROPÄISCHE PATENTSCHRIFT

(11) **EP 3 327 309 B1**
(45) Veröffentlichungstag und Bekanntmachung des Hinweises auf die Patenterteilung: **15.04.2020**
(21) Anmeldenummer: 17199579.8
(22) Anmeldetag: 01.11.2017
(51) Int. Cl.: F16F 9/04, F16F 13/00

(54) **DÄMPFER, INSBESONDERE SCHWINGUNGSDÄMPFER**
DAMPER, IN PARTICULAR VIBRATION DAMPER
AMORTISSEUR, EN PARTICULIER AMORTISSEUR DE VIBRATIONS

(30) Priorität: 03.11.2016 LU 93287
(43) Veröffentlichungstag der Anmeldung: 30.05.2018
(73) Patentinhaber: Hofmann-Reinecke, Hans, 7130 Somerset West (ZA)
(72) Erfinder: Hofmann-Reinecke, Hans, 7130 Somerset West (ZA)
(74) Vertreter: Grabovac, Dalibor

(56) Entgegenhaltungen:
- EP-A1- 2 801 734
- EP-A2- 0 165 738
- BE-A- 537 348
- DE-A1- 19 743 543
- DE-B- 1 031 059
- DE-B- 1 238 554
- DE-B1- 1 675 634
- GB-A- 345 548
- GB-A- 900 904
- JP-A- H05 306 727
- US-A- 1 878 756
- US-A- 2 773 686
- US-A- 3 137 466
- US-A- 4 974 820
- US-B1- 6 390 254

## Beschreibung

Die Erfindung betrifft einen Dämpfer, insbesondere Schwingungsdämpfer, der zwei Krafteinleitungselemente aufweist, die sich bei Einwirkung von äußeren, entgegengesetzt gerichteten Kräften aufeinander zu bewegen oder voneinander entfernen.

Die Erfindung betrifft außerdem ein Fahrzeug mit einem solchen Dämpfer und ein Möbelstück mit einem solchen Dämpfer.

Um Bewegungen zu bremsen, insbesondere um Bewegungen von Bauteilen oder Maschinen abzubremsen, werden häufig Dämpfer eingesetzt, die die kinetische Energie des Bauteils oder der Maschine in Wärmeenergie umwandeln. Zum Dämpfen von mechanischen Schwingungen von Systemen, insbesondere von Systemen, die federnd gelagert sind, werden Schwingungsdämpfer eingesetzt, die zumeist zwei Krafteinleitungselemente aufweisen, deren Abstand durch Einwirkung äußerer Kräfte verändern lässt, wobei der Schwingungsdämpfer der Abstandsveränderung einen Widerstand entgegengesetzt und die Bewegungsenergie des zu dämpfenden Systems in Wärme umgewandelt.

Bei einem Kraftfahrzeug werden zumeist Schwingungsdämpfer eingesetzt, die oftmals auch als Stoßdämpfer bezeichnet werden. Bei einem Fahrzeug ist stets eine Federung vorhanden, die dazu dient, durch Fahrbahnunebenheiten ins Fahrzeug eingeleitete Stöße abzufangen. Die in die Federung eingetragene Energie wird mittels Schwingungsdämpfern in Wärme umgewandelt um ein länger andauerndes Nachschwingen der gesamten Fahrzeugkarosserie zu unterbinden. Das Umwandeln der in den Federn des Fahrwerks gespeicherten Energie in Wärme geschieht durch dissipative Prozesse, wie etwa durch das Pressen einer Flüssigkeit durch eine enge Öffnung. Zumeist bestehen Schwingungsdämpfer für ein Fahrzeug aus Zylindern mit eingepassten Kolben, Stangen, Dichtungsringen und Ventilen.

Aus DE 197 43 543 A1 ist eine Stoßdämpferanordnung und ein Verfahren zur Stoßdämpfung bekannt. Die Stoßdämpferanordnung weist eine erste und eine zweite Fluidkammer zur Aufnahme eines Mediums auf, die jeweils durch eine Begrenzungseinrichtung umhüllt sind. Darüber hinaus ist ein Zwischenelement vorhanden, das im Wesentlichen zwischen der ersten und der zweiten Fluidkammer angeordnet ist und wenigstens eine Stoßdämpfungsöffnung aufweist, durch die das Medium aus der ersten Fluidkammer in die zweite Fluidkammer eindringen kann und umgekehrt. Die erste Fluidkammer schließt sich derart an das Zwischenelement an, dass stets ein im Wesentlichen gleichbleibender Bereich der Begrenzungseinrichtung der ersten Fluidkammer an dem Zwischenelement anliegt. Auch die zweite Fluidkammer schließt sich derart an das Zwischenelement an, dass stets ein bestimmter Teil der Begrenzungseinrichtung der zweiten Fluidkammer an dem Zwischenelement anliegt. Das Zwischenelement weist einen Befestigungsaufnahmebereich auf, mittels dem die Stoßdämpferanordnung an einem Fremdelement, wie beispielsweise einem Chassis, befestigt werden kann. Darüber hinaus kann eine Dämpfstange vorhanden sein, die einen weiteren Befestigungsaufnahmebereich aufweist. Über die Dämpfstange können relativ zu dem Zwischenelement zu dämpfende Bewegungen eingeleitet werden, wobei je nach Bewegungsrichtung entweder die erste Fluidkammer oder die zweite Fluidkammer auf Druck belastet wird. Das Verhältnis von Längenänderung zu Innenvolumenänderung ist bei den beiden Fluidkammern identisch. Eine ähnliche Vorrichtung ist aus JP 05306727 A bekannt.

Aus DE 43 44 898 A1 ist eine Dämpfungsanordnung für einen Kassettendeckel bekannt. Die Dämpfungsanordnung zeichnet sich dadurch aus, dass zwischen dem Kassettendeckel und einem Chassisteil ein Dämpfungselement angeordnet ist, das aus einem elastischen, hohlförmigen Faltenbalg besteht. Der Faltenbalg weist eine Öffnung in einer definierten Größe auf, wobei die Öffnung einen Hohlraum des Faltenbalgs mit der Außenumgebung des Faltenbalgs verbindet.

Aus DE 2 162 966 ist ein pneumatischer Stoßdämpfer, insbesondere für Fahrzeugsitze, bekannt. Der pneumatische Stoßdämpfer ist gekennzeichnet durch einen nachgiebigen, gegen Außendruck ausgesteiften Faltenbalg, dessen beide Enden dicht mit je einem Befestigungselement verbunden sind. Mindestens eines der Befestigungselemente enthält eine ins Innere des Faltenbalgs führende Drosselöffnung und ein bei Ausdehnung des Faltenbalgs schließendes Rückschlagventil.

Aus DE 32 44 997 C2 ist ein Stoßdämpfer, insbesondere für Büromaschinen und ähnliche kleine Lasten, bekannt. Der Stoßdämpfer weist ein Gehäuse mit starren, plattenartigen Abschlusspartien auf, die miteinander durch einen elastischen und kegelstumpfförmigen Faltenbalg verbunden und gegeneinander in axialer Richtung des Faltenbalgs bewegbar sind. Darüber hinaus weist der Stoßdämpfer eine federnde Rückstellung und eine in einer der Abschlusspartien ausgebildeten, in das Innere des Gehäuses führende Öffnung auf. Die Größe der einzelnen Falten nimmt vom Ende des Faltenbalgs mit dem größeren Durchmesser zum anderen Ende hin allmählich und kontinuierlich ab.

Aus DE 34 44 978 A1 ist eine Vorrichtung zur Speicherung und Übertragung von Energie bekannt. Die Vorrichtung beinhaltet axialelastische Dehnzylinder mit einer Elastomerwandung, wobei zwei oder mehrere Dehnzylinder funktionell derartig zusammengekoppelt sind, dass sie gesetzmäßig gegenseitig bedingt dehnbar oder rückdehnbar sind.

Aus GB 345,548 ist eine pneumatische Federvorrichtung für eine Fahrzeugfederung bekannt. Die Federvorrichtung beinhaltet zwei miteinander verbundene pneumatische Federn, wobei die Kompression einer der pneumatischen Federn mit einer Expansion der anderen pneumatischen Feder einher geht und wobei eine der pneumatischen Federn einer Kompression einen größeren Widerstand entgegen setzt, als die andere pneumatische Feder. Eine ähnliche pneumatische Federvorrichtung ist aus US 1,878,756 bekannt.

Aus DE 1031 059 B ist eine Luftfederung ohne gleitende Teile mit hintereinander geschalteten Luftkammern, die durch Öffnungen miteinander verbunden sind, bekannt. Eine innere Luftkammer weist eine dünne Wandung auf, die an der Federung nicht teilnimmt. Während der Federung wird bei Verkürzung der Feder die innere Luftkammer verkleinert, während die anderen Luftkammern, die eine schalenförmige, dickere Wand als die innere Luftkammer aufweisen, nahezu unverändert bleiben.
US 2,773,686 und US 3,137,466 sind zwei weitere Federvorrichtungen aus dem Stand der Technik.
US 2,773,686 offenbart einen Dämpfer, insbesondere Schwingungsdämpfer, der zwei Krafteinleitungselemente aufweist, die sich bei Einwirkung von äußeren, entgegengesetzt gerichteten Kräften aufeinander zu bewegen oder voneinander entfernen,wobei der Dämpfer eine erste und eine zweite Kammer aufweist, deren Füllvolumen veränderbar ist und die beide, insbesondere vollständig, mit einem strömungsfähigen Medium gefüllt sind und die beide an einem gemeinsamen Zwischenelement angeordnet sind, das eine Durchlassvorrichtung aufweist, mittels der die Kammern derart miteinander verbunden sind, wobei das Medium von einer Kammer in die andere Kammer strömen kann, wobei jede der Kammern ein flexibles Hüllenteil und eines der Krafteinleitungselemente aufweist und wobei jeweils ein Annähern des Krafteinleitungselements zu dem Zwischenelement und die damit einher gehende Längenänderung der jeweiligen Kammer eine Änderung des Innenvolumens der jeweiligen Kammer bewirkt.
US 2,773,686 offenbart allerdings kein Verhältnis von Längenänderung zu Innenvolumenänderung bei den beiden Kammern, das unterschiedlich ist.

Die aus dem Stand der Technik bekannten Dämpfer haben den Nachteil, dass sie nur begrenzte Anwendungsmöglichkeiten bieten und/oder sehr kompliziert und damit störungsanfällig aufgebaut sind.

Es ist die Aufgabe der vorliegenden Erfindung einen Dämpfer anzugeben, der für ganz unterschiedliche Anwendungen verwendbar ist und der besonders einfach und zuverlässig ausgebildet ist.

Die Aufgabe wird durch einen Dämpfer gelöst, wobei der Dämpfer eine erste und eine zweite Kammer aufweist, deren Füllvolumen veränderbar ist und die beide, insbesondere vollständig, mit einem strömungsfähigen Medium gefüllt sind und die beide an einem gemeinsamen Zwischenelement angeordnet sind, das eine Durchlassvorrichtung aufweist, mittels der die Kammern derart miteinander verbunden sind, wobei das Medium von einer Kammer in die andere Kammer strömen kann, wobei jede der Kammern ein flexibles Hüllenteil und eines der Krafteinleitungselemente aufweist und wobei jeweils ein Annähern des Krafteinleitungselements zu dem Zwischenelement und die damit einher gehende Längenänderung der jeweiligen Kammer eine Änderung des Innenvolumens der jeweiligen Kammer bewirkt, dadurch gekennzeichnet, dass das Verhältnis von Längenänderung zu Innenvolumenänderung bei den beiden Kammern unterschiedlich ist.

Der erfindungsgemäße Dämpfer hat den ganz besonderen Vorteil, dass er ohne Teile, die sich gleitend oder reibend gegeneinander bewegen, auskommen kann, was weiter unten im Detail erläutert ist. Aus diesem Grund kann der erfindungsgemäße Dämpfer besonders verschleißarm ausgebildet werden. Darüber hinaus ist der Wartungsbedarf bei dem erfindungsgemäßen Dämpfer äußerst gering.

Außerdem kann der erfindungsgemäße Dämpfer zusätzlich auch eine Federfunktion aufweisen, was ebenfalls weiter unten im Detail erläutert ist.

Der Dämpfer kann in einer vorteilhaften Ausgestaltung, was weiter unten ausführlich beschrieben ist, statt zwei Kammern auch drei oder mehr Kammern aufweisen. Die grundsätzliche Funktionsweise des erfindungsgemäßen Dämpfers wird zum besseren Verständnis nachfolgend jedoch zunächst für eine Ausführung mit genau zwei Kammern beschrieben.

Die erste Kammer kann ein erstes rigides Hüllenteil aufweisen, das ein erstes der Krafteinleitungselemente ist. Alternativ oder zusätzlich kann auch vorgesehen sein, dass die zweite Kammer ein zweites rigides Hüllenteil aufweist, das ein zweites der Krafteinleitungselemente ist.

Bei einer vorteilhaften Ausführung ist vorgesehen, dass die Projektionen der dem Medium zugewandten Innenflächen der Krafteinleitungselemente, insbesondere der rigiden Hüllenteile, in Verschieberichtung der Krafteinleitungselemente unterschiedlich groß sind. Dieser Dämpfer nutzt die Tatsache aus, dass im Inneren der Kammer, die das rigide Hüllenteil mit der (in Projektion auf die Verschieberichtung des zugehörigen Krafteinleitungselements betrachtet) kleineren, dem Medium zugewandte Innenfläche aufweist, ein höherer Druck herrscht, als im Inneren der anderen Kammer, die das rigide Hüllenteil mit der (in Projektion auf die Verschieberichtung des zugehörigen Krafteinleitungselements betrachtet) größeren, dem Medium zugewandte Innenfläche aufweist, wenn auf die rigiden Hüllenteile, die als Krafteinleitungselemente fungieren, entgegengesetzte und aufeinander zu gerichtete Kräfte wirken. Ursache hierfür ist, dass der Betrag der auf jede der Kammern einwirkenden Kraft gleich ist, der jeweils wirkende Druck jedoch auf Grund der unterschiedlich großen Innenflächen (betrachtet in Projektion auf die Verschieberichtung des zugehörigen Krafteinleitungselements) der rigiden Hüllenteile, an denen die Kräfte angreifen, unterschiedlich ist.

Auf Grund dieses Druckunterschieds strömt ein Teil des Mediums aus der Kammer, die das rigide Hüllenteil mit der kleineren, dem Medium zugewandte Innenfläche aufweist, durch die Durchlassvorrichtung in die andere Kammer, wobei die durch die äußeren Kräfte zum Annähern der rigiden Hüllenteile geleistete Arbeit in Wärme umgesetzt wird. Insgesamt vollzieht sich ein dissipativer Prozess, bei dem die Energie der Bewegung von externen Bauteilen oder Systemen, die an die Krafteinleitungselemente angekoppelt sind, in thermische Energie übergeht. Bei entgegengesetzter Krafteinwirkungsrichtung kehrt sich die Strömungsrichtung um.

Aufgrund der Tatsache, dass jeweils ein Annähern des rigiden Hüllenteils zu dem Zwischenelement und die damit einher gehende Längenänderung der jeweiligen Kammer eine Änderung des Innenvolumens der jeweiligen Kammer bewirkt, wobei das Verhältnis von Längenänderung zu Innenvolumenänderung bei den beiden Kammern unterschiedlich ist, ist vorteilhaft erreicht, dass die rigiden Hüllenteile, die als Krafteinleitungselemente fungieren und die insbesondere die einander entgegengesetzt angeordnete Enden des Dämpfers bilden können, sich einander annähern können, wenn der Dämpfer durch äußere, aufeinander zu gerichtete Kräfte zusammengedrückt wird, wobei eine der Kammern, nämlich die Kammer, aus der das Medium ausströmt, fortlaufend an Länge verliert, während die andere Kammer, in die das Medium einströmt, gleichzeitig, allerdings in einem geringeren Maße, an Länge gewinnt. Wird der derart ausgebildete Dämpfer durch äußere, voneinander weg gerichtete Kräfte auseinander gezogen, kehrt sich die Strömungsrichtung um, wobei die Kammer, in die das Medium einströmt, schneller an Länge gewinnt, als die Kammer, aus der das Medium ausströmt. Dies kann vorteilhaft insbesondere unter Verwendung zweier, im Querschnitt senkrecht zur Axialrichtung unterschiedlich großer Faltenbalge realisiert werden, was weiter im Einzelnen genauer erläutert wird.

Bei einer ganz besonders vorteilhaften Ausführung ist wenigstens eines der flexiblen Hüllenteile als Faltenbalg mit wenigstens einer Ringfalte ausgebildet. Insbesondere kann vorteilhaft vorgesehen sein, dass wenigstens eines der flexiblen Hüllenteile als zylinderförmiger, insbesondere kreiszylinderförmiger, Faltenbalg mit wenigstens einer Ringfalte ausgebildet ist.

Besonders vorteilhaft ist eine Ausführung, bei der beide flexiblen Hüllenteile als, insbesondere koaxial zueinander angeordnete, Faltenbalge ausgebildet sind. Hierbei kann vorteilhaft insbesondere vorgesehen sein, dass beide flexiblen Hüllenteile kreiszylinderförmige Faltenbalge sind, wobei einer der Faltenbalge stets einen größeren Innendurchmesser aufweist, als der andere. Insbesondere können die Faltenbalge derart gewählt sein, dass deren Innendurchmesser, im vollständig zusammengeschobenen Zustand gemessen, unterschiedlich sind.

Insbesondere bei einer solchen Ausführung kann das rigide Hüllenteil einer Kammer als Deckel oder als Boden für den das flexible Hüllenteil bildenden Faltenbalg ausgebildet sein, wobei das rigide Hüllenteil den Faltenbalg nach außen hermetisch und für das Medium undurchlässig abschließt.

Die flexiblen Hüllenteile können vorteilhaft beispielsweise aus Gummi oder aus einem Metall oder eine Metalllegierung hergestellt sein.

Vorzugsweise sind die flexiblen Hüllenteile derart ausgebildet, dass die flexiblen Hüllenteile bei einer Belastung des Dämpfers mit einer äußeren Kraft ihre Form, jedoch nicht die Größe ihrer Fläche, insbesondere ihrer Innenfläche, verändern. Alternativ oder zusätzlich kann vorteilhaft vorgesehen sein, dass die flexiblen Hüllenteile gegen radiale Kräfte, also gegen Kräfte senkrecht zum Verschiebeweg der Krafteinleitungselemente, ausgesteift sind und/oder dass das Innenvolumen der flexiblen Hüllenteile, insbesondere im Wesentlichen, nur in Axialrichtung veränderbar ist. Auf diese Weise ist vorteilhaft vermieden, dass der Dämpfer auf äußere Kräfte statt mit einem Überströmen des Mediums von einer Kammer in die andere Kammer ganz oder teilweise mit einem, beispielsweise radialen, Ausweichen der flexiblen Hüllenteile reagiert. Ein Aussteifen kann beispielsweise dadurch realisiert sein, dass die Wandung aus einem dehnfesten Material in ausreichender Dicke hergestellt ist und/oder dass in die einzelnen Falten Verstärkungsringe eingearbeitet sind.

Vorzugsweise sind die Hüllen der Kammern, abgesehen von einer Durchlässigkeit der Durchlassvorrichtung, für das strömungsfähige Medium undurchlässig ausgebildet. Insbesondere ist jeweils das rigide Hüllenteil für das strömungsfähige Medium undurchlässig mit dem flexiblen Hüllenteil verbunden.

Es können allerdings verschließbare Öffnungen vorhanden sein, beispielsweise um die Kammern mit dem Medium befüllen zu können oder um im Wartungsfall das Medium ablassen zu können. Bei einer besonders kostengünstig herstellbaren und robusten Ausführung wird der Dämpfer jedoch bereits bei der Herstellung befüllt und hermetisch derart verschlossen, dass er nicht mehr zerstörungsfrei geöffnet werden kann.

Bei einer vorteilhaften Ausführung sind die rigiden Hüllenteile an entgegengesetzten Enden der über das Zwischenelement miteinander verbundenen Kammern angeordnet. Alternativ kann auch vorgesehen sein, dass die rigiden Hüllenteile die einander entgegengesetzt angeordnete Enden des Dämpfers bilden. Bei diesen Ausführungen ist es auf einfache Weise ermöglicht, den Dämpfer derart einzusetzen, dass auf die beiden äußeren Krafteinleitungselemente entgegengesetzte und aufeinander zu gerichtete Kräfte oder entgegengesetzte und voneinander weg gerichtete Kräfte wirken können.

Bei dem Medium kann es sich insbesondere um ein Gas, eine Flüssigkeit, insbesondere ein Hydrauliköl, handeln. Das Medium kann auch ein Nanofluid sein. Es ist auch möglich, dass das Medium aus Kugeln besteht, die im Verhältnis zu den Abmessungen der Kammern und der Durchlassvorrichtung so hinreichend klein sind, dass eine Strömung von Kugeln zwischen den Kammern auf Grund der oben beschriebenen Prozesse stattfindet. Vorzugsweise ist das Medium inkompressibel.

Die Durchlassvorrichtung kann wenigstens einen Kanal aufweisen, durch den das strömungsfähige Medium von einer Kammer in die andere Kammer strömen kann. Alternativ oder zusätzlich kann auch vorgesehen sein, dass die Durchlassvorrichtung ein Ventil aufweist. Das Maß, in dem das durch die Durchlassvorrichtung strömende Medium gebremst wird und in dem die eingetragene Energie in Wärme umgesetzt wird, hängt insbesondere von der Viskosität des Mediums und dem Durchlasswiderstand der Durchlassvorrichtung ab.

Bei einer ganz besonders vorteilhaften Ausführung weist die Durchlassvorrichtung strömungsrichtungsabhängig unterschiedliche Durchlasswiderstände auf. Beispielsweise kann der Dämpfer derart ausgebildet sein, dass das Medium bei einer Kompression des Dämpfers einen geringeren Durchlasswiderstand erfährt als bei einer Dilatation des Dämpfers. In diesem Fall wirkt der Dämpfer ähnlich wie ein Schwingungsdämpfer, wie er üblicherweise in Radaufhängungen verbaut wird und der oftmals auch als Stoßdämpfer bezeichnet wird.

Strömungsrichtungsabhängig unterschiedliche Durchlasswiderstände lassen sich beispielsweise durch eine besondere, insbesondere asymmetrische Form einer Durchlassdüse oder durch Verwendung wenigstens eines Ventils, insbesondere eines Rückschlagventils, realisieren.

Der erfindungsgemäße Dämpfer kann vorteilhaft eine Federvorrichtung aufweisen, die die Krafteinleitungselemente und das Zwischenelement relativ zueinander in eine Ausgangsstellung drängt. Beispielsweise kann vorteilhaft vorgesehen sein, dass die Federvorrichtung den von außen auf den Dämpfer einwirkenden Kräften eine Rückstellkraft entgegensetzt. Eine solche Ausführung hat den ganz besonderen Vorteil, dass der Dämpfer zwei Funktionen, nämlich die Funktion einer federnden Lagerung relativ zueinander beweglicher, externer Bauteile und eine Dämpfungsfunktion in sich vereinigt. Insoweit hat eine solche Ausführung den Vorteil, dass auf zusätzlich zum Dämpfer einzusetzende externe Federn verzichtet werden kann.

Bei einer ganz besonders vorteilhaften Ausführung ist die Federvorrichtung wenigstens teilweise, insbesondere vollständig, durch die flexiblen Hüllenteile gebildet. Insbesondere kann beispielsweise ein Faltenbalg, der als flexibles Hüllenteil fungiert, zusätzlich eine Federfunktion aufweisen. Hierzu kann der Faltenbalg beispielsweise aus Stahl, insbesondere Federstahl, oder aus Gummi hergestellt sein und insbesondere hinsichtlich der Wandstärke entsprechend dimensioniert sein.

Es ist allerdings, alternativ oder zusätzlich, auch möglich, dass die Federvorrichtung lediglich teilweise durch die flexiblen Hüllenteile gebildet ist und dass der Dämpfer außer den flexiblen Hüllenteilen weitere Federelemente aufweist. Die weiteren Federelemente können vorteilhaft zu den flexiblen Hüllenteilen mechanisch parallel geschaltet sein.

Bei einer anderen Ausführung weisen die flexiblen Hüllenteile keine oder nur eine sehr geringe Federwirkung auf. Bei einer solchen Ausführung kann der Dämpfer separate Federelemente aufweisen, die insbesondere zu den flexiblen Hüllenteilen mechanisch parallel geschaltet sein können.

Bei einer besonders kompakt und robust ausbildbaren Ausführung sind die Krafteinleitungselemente ausschließlich mittels der flexiblen Hüllenteile mit dem Zwischenelement verbunden. Alternativ oder zusätzlich kann auch vorgesehen sein, dass außer den flexiblen Hüllenteilen und/oder der Federvorrichtung kein Führungselement zum Führen der Krafteinleitungselemente und des Zwischenelements relativ zueinander vorhanden ist.

Allerdings sollte gewährleistet sein, dass die Kammern auch dann, wenn sie zu einer großen axialen Länge ausgefahren sind, genügend Stabilität aufweisen und die äußeren Kräfte kein seitliches Einknicken verursachen können. Insbesondere bei einer Ausführung, die Faltenbalge unterschiedlichen Innendurchmessers aufweist, sollte die maximal mögliche Länge und der Durchmesser jedes Faltenbalgs so gewählt sein, dass ein Einknicken bei den zu erwartenden Kräften sicher ausgeschlossen werden kann. Dies gilt insbesondere für den Faltenbalg mit dem kleineren Durchmesser.

Um die Gefahr eines Einknickens des flexiblen Hüllenteils einer der Kammern zu verringern, sind bei einer besonderen Ausführung statt zwei Kammern drei oder mehr Kammern in Reihe geschaltet, was die Verwendung von Kammern einer geringeren maximalen Länge zulässt.

Ganz allgemein kann insoweit vorgesehen sein, dass eine der Kammern anstelle eines Krafteinleitungselements ein weiteres Zwischenelement aufweist, an dem eine dritte, insbesondere vollständig, mit dem Medium gefüllte Kammer angeordnet ist und das eine weitere Durchlassvorrichtung für das Medium aufweist, wobei die dritte Kammer (anstelle der Kammer, die anstelle des Krafteinleitungselements nun das weitere Zwischenelement hat) ein drittes flexibles Hüllenteil das Krafteinleitungselement aufweist. Insbesondere kann das das Krafteinleitungselement der dritten Kammer durch ein drittes rigides Hüllenteil gebildet sein.

Insbesondere kann vorteilhaft vorgesehen sein, dass das die Projektion der dem Medium der dritten Kammer zugewandten Innenfläche des Krafteinleitungselements der dritten Kammer und/oder des dritten rigiden Hüllenteils auf eine Ebene senkrecht zur Ache, entlang der die äußeren Kräfte einwirken, kleiner ist, als die Projektion der dem Medium der zweiten Kammer zugewandten Innenfläche des weiteren Zwischenelements auf eine Ebene senkrecht zur Ache, entlang der die äußeren Kräfte einwirken. Auf diese Weise wird bewirkt, dass der Druck in der dritten Kammer bei Belastung des Dämpfers mit äußeren Kräften verschieden ist von dem Druck in der Kammer, an die die dritte Kammer angeschlossen ist, so dass das Medium - je nach Krafteinwirkung - von einer Kammer in die andere gedrückt wird.

Hierbei kann, genauso wie oben bereits in Bezug auf die Ausführung mit zwei Kammern beschrieben, vorteilhaft vorgesehen sein, dass ein Annähern des Krafteinleitungselements der dritten Kammer zu dem weiteren Zwischenelement eine Änderung des Innenvolumens der dritten Kammer bewirkt und dass Verhältnis von Längenänderung zu Innenvolumenänderung bei der dritten Kammer unterschiedlich ist zu dem Verhältnis von Längenänderung zu Innenvolumenänderung der zweiten Kammer, zu der das Zwischenelement und das weitere Zwischenelement gehört, und/oder gleich dem Verhältnis von Längenänderung zu Innenvolumenänderung der ersten Kammer, zu der das Zwischenelement und das an einem freien Ende des Dämpfers angeordnete rigide Hüllenteil gehört.

Beispielsweise kann statt eines zweikammerigen Dämpfers mit zwei Faltenbalgen, bei dem einer der Faltenbalge im ausgezogenen Zustand besonders lang ist, ein dreikammeriger Dämpfer mit drei Faltenbalgen zum Einsatz kommen, wobei der im ausgezogenen Zustand besonders lange Faltenbalg durch zwei kürzere Faltenbalge ersetzt ist, die vorzugsweise beidseitig an eine mittlere Kammer, die einen Faltenbalg mit einem größeren Durchmesser aufweist, in der oben beschriebenen Weise u.a. mittels einer Durchlassvorrichtung und einer weiteren Durchlassvorrichtung angeschlossen sind.

In Bezug auf die dritte Kammer kann, analog wie bei einer zweikammerigen Ausführung eine weitere Federvorrichtung vorhanden sein, die das Krafteinleitungselement und das weitere Zwischenelement relativ zueinander in eine weitere Ausgangsstellung drängt. Die weitere Federvorrichtung kann wenigstens teilweise, insbesondere vollständig, durch das dritte flexible Hüllenteil gebildet sein. Es ist jedoch auch möglich, dass die weitere Federvorrichtung ein zusätzliches, insbesondere mechanisch zu dem dritten flexiblen Hüllenteil parallel geschaltetes, Federelement aufweist.

Bei einer besonders robusten und kompakten Ausführung ist das Krafteinleitungselement ausschließlich mittels des dritten flexiblen Hüllenteils mit dem weiteren Zwischenelement verbunden. Alternativ oder zusätzlich kann auch vorgesehen sein, dass außer dem dritten flexiblen Hüllenteil und/oder einer weiteren Federvorrichtung kein Führungselement zum Führen des Krafteinleitungselements relativ zu dem weiteren Zwischenelement vorhanden ist.

Analog wie oben bereits in Bezug auf eine zweikammerige Ausführung beschrieben, kann das dritte flexible Hüllenteil vorteilhaft derart ausgebildet sein, dass es bei einer Belastung des Dämpfers mit einer äußeren Kraft seine Form, jedoch nicht die Größe seiner Fläche, insbesondere seiner Innenfläche, verändert. Alternativ oder zusätzlich kann auch vorgesehen sein, dass dritte flexible Hüllenteil gegen radiale Kräfte ausgesteift ist und/oder dass das Innenvolumen des dritten flexiblen Hüllenteils, insbesondere im Wesentlichen, nur in Axialrichtung veränderbar ist.

Der erfindungsgemäße Dämpfer kann insbesondere dazu ausgelegt sein, dass auf die beiden äußeren Krafteinleitungselemente entgegengesetzte und aufeinander zu gerichtete Kräfte und/oder entgegengesetzte und voneinander weg gerichtete Kräfte wirken. Insbesondere kann der Dämpfer dazu ausgelegt sein, abwechselnd durch äußere Kräfte verkürzt und gelängt zu werden.

Bei einer besonderen Ausführung weist der Dämpfer einen umlaufenden Kragen auf, der dazu dient, eines der flexiblen Hüllenteile radial, insbesondere für den Fall des Einknickens, zu stützen. Der Kragen weist vorzugsweise eine Höhe auf, die nicht größer ist, als die Höhe des zu stützenden flexiblen Hüllenteils im vollständig komprimierten Zustand, so dass sich an der ausnutzbaren Gesamthöhe des Dämpfers nichts ändert. Der Kragen kann an einem der Krafteinleitungselemente oder an dem Zwischenelement befestigt sein.

Es ist auch möglich, dass mehrere Kragen vorhanden sind. Insbesondere können mehrere Kragen zum Abstützen desselben flexiblen Hüllenteils vorhanden sein, wobei einer der Kragen an einem Krafteinleitungselement angeordnet ist, während der Kragen andere an dem Zwischenelement angeordnet ist. Insbesondere können die beiden Kragen (beispielsweise durch unterschiedliche Durchmesser) derart ausgebildet sein, das sie teleskopartig ineinander greifen und sich so nicht gegenseitig behindern.

Der erfindungsgemäße Dämpfer kann vorteilhaft als Schwingungsdämpfer für eine Radaufhängung eines Fahrzeugs, insbesondere eines Kraftfahrzeuges, ausgebildet sein. Von besonderem Vorteil ist ein Fahrzeug, insbesondere ein Kraftfahrzeug, das wenigstens einen erfindungsgemäßen Dämpfer aufweist. Beispielsweise kann eines der Krafteinleitungselemente, insbesondere beweglich, an einer Fahrzeugkarosserie befestigt sein, während das andere der Krafteinleitungselemente, insbesondere beweglich, an einem Bauteil, dessen Bewegung zu dämpfen ist, befestigt sein kann.

Der erfindungsgemäße Dämpfer kann vorteilhaft auch als Schwingungsdämpfer zum Dämpfen der Schwingungen einer Maschine, insbesondere eines Verbrennungsmotors, ausgebildet sein. Insbesondere kann der erfindungsgemäße Dämpfer als Lagerung für eine Maschine, beispielsweise eines Notstromaggregats ausgebildet sein.

Der erfindungsgemäße Dämpfer kann insbesondere sehr kleinbauend ausgebildet werden, so dass er beispielsweise auch als Bremse für eine Schulbade oder eine Tür eingesetzt werden kann. Mittels des erfindungsgemäßen Dämpfers kann beispielsweise eine zufallende Tür sanft abgebremst werden, bevor sie ihre Geschlossenstellung erreicht. Die Tür kann beispielsweise die Tür eines Möbelstücks, die Tür eines Fahrzeugs oder eine Zimmertür sein.

Besonders vorteilhaft kann der erfindungsgemäße Dämpfer insbesondere auch in Möbelstücken zum Abbremsen von bewegten Bauteilen eingesetzt werden.

Es ist insbesondere auch möglich, den erfindungsgemäßen Dämpfer in Umgebungen einzusetzen, in denen er dem Einfluss von Schmutz oder Flüssigkeiten ausgesetzt ist. Insbesondere kann der erfindungsgemäße Dämpfer auch in einer flüssigen Umgebung, beispielsweise unter Wasser, eingesetzt werden. Hierbei ist von besonderem Vorteil, dass der erfindungsgemäße Dämpfer vorzugsweise als ein hermetisch abgeschlossenes System ausgebildet ist, das gänzlich ohne Dichtungen zwischen relativ zueinander bewegten Bauteilen, wie beispielsweise Wellendichtringe, auskommt. Daher ist das Eindringen von Schmutz oder schädlichen Substanzen bei dem erfindungsgemäßen Dämpfer ausgeschlossen.

In der Zeichnung ist der Erfindungsgegenstand beispielhaft und schematisch dargestellt und wird anhand der Figuren nachfolgend beschrieben, wobei gleiche oder gleich wirkende Elemente auch in unterschiedlichen Ausführungsbeispielen zumeist mit denselben Bezugszeichen versehen sind. Dabei zeigen:
- Fig. 1: ein Ausführungsbeispiel eines erfindungsgemäßen Dämpfers,
- Fig. 2: ein anderes Ausführungsbeispiel eines erfindungsgemäßen Dämpfers, und
- Fig. 3: ein weiteres Ausführungsbeispiel eines erfindungsgemäßen Dämpfers.

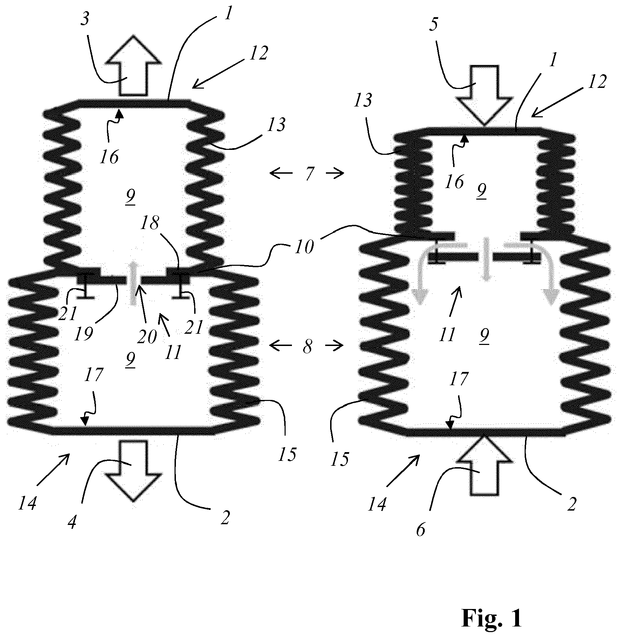

Fig. 1 zeigt ein Ausführungsbeispiel eines erfindungsgemäßen Dämpfers in zwei unterschiedlichen Belastungssituationen. Der Dämpfer weist zwei Krafteinleitungselemente, nämlich ein erstes Krafteinleitungselement 1 und ein zweites Krafteinleitungselement 2 auf, die sich bei Einwirkung von äußeren, entgegengesetzt und aufeinander zu gerichteten Kräften, 3, 4 aufeinander zu bewegen (linke Darstellung) und bei Einwirkung von äußeren, entgegengesetzt und voneinander weg gerichteten Kräften 5, 6 voneinander entfernen (rechte Darstellung).

Der Dämpfer weist eine erste Kammer 7 und eine zweite Kammer 8 auf, deren Füllvolumen veränderbar ist und die beide, insbesondere vollständig, mit einem strömungsfähigen Medium 9 gefüllt sind.

Die beiden Kammern 7, 8 sind an einem gemeinsamen Zwischenelement 10 angeordnet, das eine Durchlassvorrichtung 11 aufweist, mittels der die Kammern 7, 8 derart miteinander verbunden sind, dass das Medium 9 von der ersten Kammer 7 in die zweite Kammer 8 strömen kann.

Die erste Kammer weist eine erste Hülle mit einem ersten rigiden Hüllenteil 12 und einem ersten flexiblen Hüllenteil 13 auf. Das erste rigide Hüllenteil 12 ist durch das erste Krafteinleitungselement 1 gebildet. Das erste flexible Hüllenteil 13 ist durch einen ersten Faltenbalg gebildet, wobei das erste rigide Hüllenteil 12 das zweite flexible Hüllenteil 13 wie ein Deckel nach außen für das Medium 9 undurchlässig abschließt.

Die zweite Kammer 8 weist eine zweite Hülle mit einem zweiten rigiden Hüllenteil 14 und einem zweiten flexiblen Hüllenteil 15 auf. Das zweite rigide Hüllenteil 14 ist durch das zweite Krafteinleitungselement 2 gebildet. Das zweite flexible Hüllenteil 15 ist durch einen zweiten Faltenbalg gebildet, der einen größeren Innendurchmesser aufweist, als der erste Faltenbalg, der das erste flexible Hüllenteil 13 bildet. Das zweite rigide Hüllenteil 14 schließt das zweite flexible Hüllenteil 15 wie ein Deckel nach außen, in einer für das Medium 9 undurchlässigen Weise, ab.

Die Kammern 7, 8 sind, abgesehen von der Durchlassvorrichtung 11, für das Medium 9 undurchlässig ausgebildet. Der gesamte Dämpfer ist nach außen hin hermetisch abgeschlossen.

Das erste rigide Hüllenteil 12 weist eine dem Medium 9 zugewandte erste Innenfläche 16 auf, die kleiner ist als die zweite Innenfläche 17 des zweiten rigiden Hüllenteils 14.

Wenn auf die rigiden Hüllenteile 12, 14, die gleichzeitig die Krafteinleitungselemente 1, 2 sind, entgegengesetzte und aufeinander zu gerichtete Kräfte 5, 6 wirken, was in der rechten Darstellung der Figur 1 gezeigt ist, so verursacht dies auf Grund der unterschiedlich großen Innenflächen 16, 17 (betrachtet in Projektion auf die Ache entlang der die äußeren Kräfte 5, 6 einwirken) im Inneren der ersten Kammer 7 einen höheren Druck, als im Inneren der zweiten Kammer 8. Ursache hierfür ist, dass die Beträge der auf die Kammern (7, 8) einwirkenden Kräfte 5, 6 gleich ist, der jeweils wirkende Druck jedoch auf Grund der unterschiedlich großen Innenflächen 16, 17 (betrachtet in Projektion auf die Ache entlang der die äußeren Kräfte 5, 6 einwirken) der rigiden Hüllenteile, an denen die Kräfte angreifen, unterschiedlich ist. Dies hat ein Überströmen des Mediums 9 von der ersten Kammer 7 durch die Durchlassvorrichtung 11 in die zweite Kammer 8 zur Folge.

Bei einer umgekehrten Krafteinwirkung, also wenn auf die rigiden Hüllenteile 12, 14, die gleichzeitig die Krafteinleitungselemente 1, 2 sind, entgegengesetzte und voneinander weg gerichtete Kräfte 3, 4 wirken, was in der linken Darstellung der Figur 1 gezeigt ist, so verursacht dies, dass im Inneren der ersten Kammer 7 ein geringerer Druck herrscht, als in der zweiten Kammer 8, was ein Überströmen des Mediums 9 von der zweiten Kammer 8 durch die Durchlassvorrichtung 11 in die erste Kammer 7 zur Folge hat.

Da die als Faltenbalge ausgebildeten flexiblen Hüllenteile 13, 15 unterschiedliche Innendurchmesser aufweisen und das Volumen des aus der ersten Kammer 7 ausströmenden und in die zweite Kammer 8 einströmenden Anteils des Medium 9 stets gleich ist, erfährt der erste Faltenbalg der ersten Kammer 7 bei Einwirkung der entgegengesetzt und aufeinander zu gerichteten Kräfte 5, 6 eine größere axiale Verkürzung, als der zweite Faltenbalg der zweiten Kammer 8. Hingegen erfährt der erste Faltenbalg der ersten Kammer 7 bei Einwirkung der entgegengesetzt und voneinander weg gerichteten Kräfte 3, 4 eine größere axiale Längung, als der zweite Faltenbalg der zweiten Kammer 8.

Wenn die erste Kammer 7 eine Querschnittsfläche q1 senkrecht zur Axialrichtung und die zweite Kammer 8 ein Querschnittsfläche q2 aufweist, das gesamte im Dämpfer befindliche Medium das Volumen V hat und die axiale Länge der ersten Kammer 7 h1 ist, während die Länge der zweiten Kammer 8 h2 ist, so gilt: V = h1 x q1 + h2 x q2. Strömt beispielsweise ein Teil des Mediums mit dem Volumen ΔV von der ersten Kammer 7 in die zweite Kammer 8, so erfährt die erste Kammer 7 eine Verkürzung um ΔV/q1, während die zweite Kammer 8 eine axiale Längung um ΔV/q2 erfährt. Da q 1 kleiner als q2 ist, nimmt die axiale Gesamtlänge des Dämpfers hierbei um (ΔV/q1)-(ΔV/q2) ab.

Würde beispielsweise gelten V = 700 cm², q1 = 100 cm², q2 = 25 cm², dann würde die Gesamthöhe bei totaler Kompression 7 cm und bei maximaler Längung 28 cm betragen. Der Gesamthub würde also 21 cm betragen. In der Praxis ist der Gesamthub jedoch etwas geringer als berechnet, weil Faltenbalge im vollständig komprimierten Zustand noch einige cm Höhe aufweisen, was in der obigen Rechnung nicht berücksichtigt ist.

Der Vollständigkeit halber sei klargestellt, dass die obige Rechnung so nicht angewendet werden kann, wenn die Kammern nicht zylinderförmig ausgebildet sind, weil dann die Querschnittsfläche der jeweiligen Kammer über die Höhe nicht konstant ist. Streng genommen sind auch Faltenbalge nicht zylinderförmig, so dass die obige Rechnung lediglich eine Näherung darstellt. Im Allgemeinen ist vielmehr jeweils konkret dV/dq (Ableitung des Volumens nach der

Höhe) für jede Kammer zu berücksichtigen.

Beim Strömen des Mediums 9 durch die Durchlassvorrichtung 11 vollzieht sich ein dissipativer Prozess, bei dem die Energie der Bewegung von externen Bauteilen oder Systemen, die an die Krafteinleitungselemente 1, 2 angekoppelt sind, in thermische Energie umgesetzt wird.

Die Faltenbalge sind gegen radiale Kräfte, also gegen Kräfte senkrecht zum Verschiebeweg der Krafteinleitungselemente1, 2, ausgesteift, so dass das Innenvolumen der Kammern 7, 8 nur in Axialrichtung veränderbar ist.

Die Durchlassvorrichtung 11 weist strömungsrichtungsabhängig unterschiedliche Durchlasswiderstände auf.

Die Durchlassvorrichtung 11 weist eine axial verschiebbar an einem Haltering 18 gelagerte Platte 19 auf. Die Platte 19 ist mit einem zentralen Durchgangskanal 20 versehen und durch stiftartige Führungselemente 21 geführt, die an ihren freien Enden Anschläge aufweisen. Auf diese Weise ist zusätzlich zu dem Durchgangskanal 20 ein Rückschlagventil ausgebildet.

Wenn auf die rigiden Hüllenteile 12, 14, die gleichzeitig die Krafteinleitungselemente 1, 2 sind, entgegengesetzte und voneinander weg gerichtete Kräfte 3, 4 wirken, was in der linken Darstellung der Figur 1 gezeigt ist, strömt das Medium 9 ausschließlich durch den zentralen Durchgangskanal 20. Die Platte 19 wird hierbei gegen den Haltering 18 in eine Geschlossenstellung gedrückt.

Wenn auf das rigide Hüllenteile 12, 14 entgegengesetzte und aufeinander zu gerichtete Kräfte 5, 6 wirken, was in der rechten Darstellung der Figur 1 gezeigt ist, wird die Platte 19 von dem Haltering 18 weg in eine Offenstellung verschoben, in der sie an den Anschlägen der stiftartigen Führungselemente 21 anliegt. Hierdurch entsteht eine umlaufene Öffnung zusätzlich zu dem Durchgangskanal 20. In diesem Fall strömt das Medium 9 sowohl durch den zentralen Durchgangskanal 20, als auch durch die zusätzliche Öffnung, so dass der Durchlasswiderstand geringer ist, als bei einer Belastung des Dämpfers mit den entgegengesetzten und voneinander weg gerichteten Kräfte 3, 4.

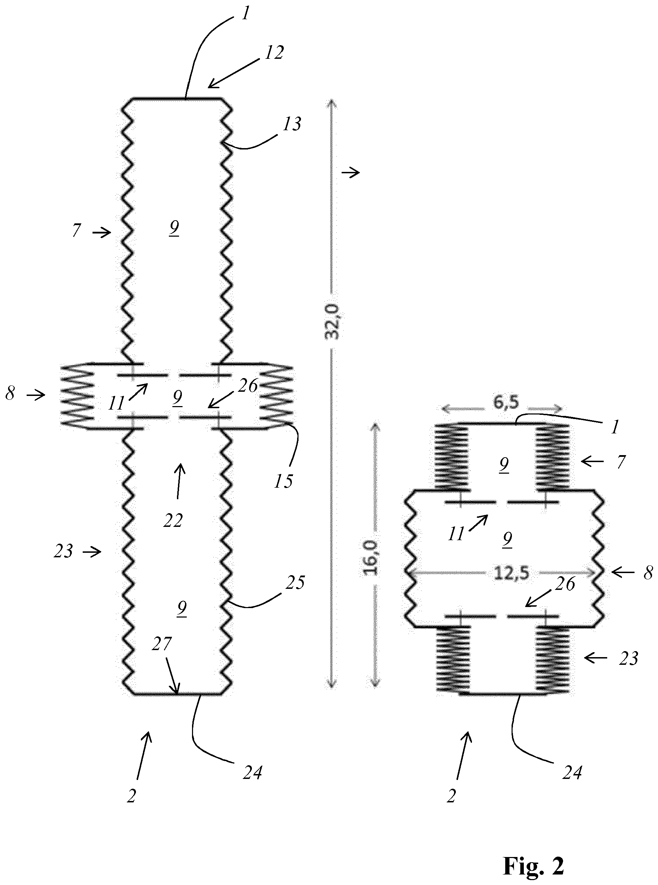

Figur 2 zeigt ein anderes Ausführungsbeispiel eines erfindungsgemäßen Dämpfers, wobei in der linken Darstellung der Dämpfer in seiner maximalen axialen Länge gezeigt ist, während die rechte Darstellung den Dämpfer mit seiner kleinstmöglichen axialen Länge zeigt.

Der Dämpfer weist eine erste Kammer 7 und eine zweite Kammer 8 ähnlich wie bei dem ersten Ausführungsbeispiel auf, wobei jedoch der Faltenbalg der ersten Kammer 7 in axialer Richtung halb so lang ausgebildet sein kann, um insgesamt denselben Effekt zu erzielen, da bei diesem Dämpfer noch eine dritte Kammer 23 mit einem entsprechend ausgebildeten Faltenbalg vorhanden ist.

Konkret weist die zweite Kammer 8 anstelle eines Krafteinleitungselements ein weiteres Zwischenelement 22 auf, an dem eine dritte mit dem Medium 9 gefüllte Kammer 23 angeordnet ist. Die dritte Kammer 23 ist genauso aufgebaut, wie die erste Kammer 7 und weist dementsprechend eine dritte Hülle mit einem dritten rigiden Hüllenteil 24 und einem dritten flexiblen Hüllenteil 25 auf, wobei das dritte rigide Hüllenteil 24 das zweite Krafteinleitungselement 2 bildet.

Das dritte rigide Hüllenteil 24 weist (betrachtet in Projektion auf die Ache entlang der die äußeren Kräfte einwirken) eine dem Medium 9 der dritten Kammer 23 zugewandte Innenfläche 27 auf, die kleiner ist, als die dem Medium 9 der zweiten Kammer 8 zugewandte Innenfläche 17 des weiteren Zwischenelements 22 (betrachtet in Projektion auf die Ache entlang der die äußeren Kräfte einwirken). Auf diese Weise wird bewirkt, dass die der Druck in der dritten Kammer 23 bei Belastung des Dämpfers mit äußeren Kräften in der dritten Kammer 23 verschieden ist von dem Druck in der zweiten Kammer 8, an die die dritte Kammer 23 angeschlossen ist.

Das dritte flexible Hüllenteil 25 ist als Faltenbalg ausgebildet und hinsichtlich Aufbau, Material und Größe gleich dem Faltenbalg der ersten Kammer 7.

Das weitere Zwischenelement 22 weist eine weitere Durchlassvorrichtung 26 für das Medium 9 auf. Die Durchlassvorrichtung 11 und die weitere Durchlassvorrichtung 26 sind identisch aufgebaut, jedoch einander entgegengesetzt ausgerichtet.

Wenn auf das erste rigide Hüllenteil 12 und das dritte rigide Hüllenteil 24, die bei dieser Ausführung die Krafteinleitungselemente 1, 2 des Dämpfers sind, entgegengesetzte und aufeinander zu gerichtete Kräfte 5, 6 wirken, so verursacht dies im Inneren der ersten Kammer 7 und im Inneren der dritten Kammer 23 jeweils einen höheren Druck, als im Inneren der zweiten Kammer 8. Dies hat ein Überströmen des Mediums 9 von der ersten Kammer 7 und der dritten Kammer 23 in die zweite Kammer 8 zur Folge.

Bei einer umgekehrten Krafteinwirkung, also wenn auf die Krafteinleitungselemente 1, 2 entgegengesetzte und voneinander weg gerichtete Kräfte 3, 4 wirken, so verursacht dies, dass im Inneren der ersten Kammer 7 und im Inneren der dritten Kammer 23 jeweils ein geringerer Druck herrscht, als in der zweiten Kammer 8, was ein Überströmen des Mediums 9 von der zweiten Kammer 8 in die erste Kammer 7 und die dritte Kammer 23 zur Folge hat.

Der Dämpfer gemäß dem anderen Ausführungsbeispiel hat gegenüber dem in Fig. 1 dargestellten Dämpfer den Vorteil, dass die Gefahr des seitlichen Einknickens bei einer komprimierenden Belastung verringert ist und dass er insgesamt handlicher ist.

Der Dämpfer kann insbesondere die in Fig. 2 beispielhaft in cm angegebenen Abmessungen und die in der nachfolgend eingeblendeten Tabelle genannten Kenngrößen aufweisen.

| Angaben in cm etc. | Volle Zugphase | Durchmesser | Querschnitt | Länge | Volumen |
|---|---|---|---|---|---|
| Volle Zugphase | Dicker Balg | 12.5 | 122.7 | 2.0 | 245.3 |
| | Schlanker Balg | 6.2 | 30.2 | 15.0 | 452.6 |
| | Dämpfer gesamt | | | 32.0 | 1150.6 |
| Volle Druckphase | Dicker Balg | 12.5 | 122.7 | 7.5 | 919.9 |
| | Schlanker Balg | 6.2 | 30.2 | 4.0 | 120.7 |
| | Dämpfer gesamt | | | 15.5 | 1161.3 |

Aus diesen Werten ergibt sich, dass der Dämpfer eine maximale axiale Länge von 32 cm aufweist und bis auf eine Länge von 16 cm zusammengedrückt werden kann, wobei die Faltenbalge hierbei um den Faktor 3,8 gedehnt bzw. gestaucht werden.

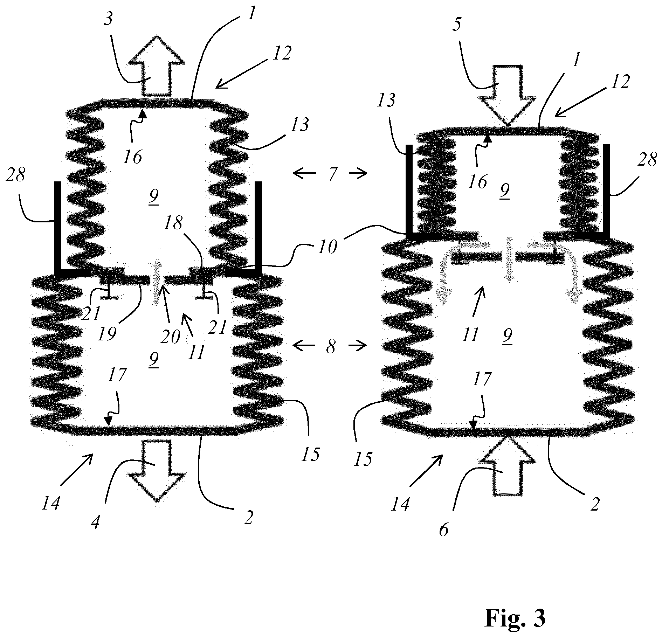

Fig. 3 zeigt ein weiteres Ausführungsbeispiel eines erfindungsgemäßen Dämpfers, das im Wesentlichen dem in Figur 1 dargestellten Ausführungsbeispiel entspricht. Der Dämpfer weist jedoch zusätzlich einen umlaufenden Kragen 28 auf, der dazu dient, das erste flexible Hüllenteil 13 radial zu stützen, falls es einknicken sollte. Der Kragen 28 weist vorzugsweise eine Höhe auf, die nicht größer ist, als die Höhe des ersten flexiblen Hüllenteils 13 im vollständig komprimierten Zustand. Der Kragen 28 ist an dem Zwischenelement 10 befestigt. Vorzugsweise ist der Kragen 28 von dem ersten flexiblen Hüllenteil 13 radial beabstandet und berührt das erste flexible Hüllenteil 13 lediglich dann, wenn dieses anfängt einzuknicken.

### Bezugszeichenliste:

- 1: erstes Krafteinleitungselement
- 2: zweites Krafteinleitungselement
- 3: Kraft
- 4: Kraft
- 5: Kraft
- 6: Kraft
- 7: erste Kammer
- 8: zweite Kammer
- 9: strömungsfähiges Medium
- 10: Zwischenelement
- 11: Durchlassvorrichtung
- 12: erstes rigides Hüllenteil
- 13: erstes flexibles Hüllenteil
- 14: zweites rigides Hüllenteil
- 15: zweites flexibles Hüllenteil
- 16: erste Innenfläche
- 17: zweite Innenfläche
- 18: Haltering
- 19: Platte
- 20: Durchgangskanal
- 21: Führungselemente
- 22: weiteres Zwischenelement
- 23: dritte Kammer
- 24: drittes rigides Hüllenteil
- 25: drittes flexibles Hüllenteil
- 26: weitere Durchlassvorrichtung
- 27: Innenfläche
- 28: Kragen

## Patentansprüche

1. Dämpfer, insbesondere Schwingungsdämpfer, der zwei Krafteinleitungselemente (1, 2) aufweist, die sich bei Einwirkung von äußeren, entgegengesetzt gerichteten Kräften (3, 4, 5, 6) aufeinander zu bewegen oder voneinander entfernen, wobei der Dämpfer eine erste und eine zweite Kammer (7, 8) aufweist, deren Füllvolumen veränderbar ist und die beide, insbesondere vollständig, mit einem strömungsfähigen Medium (9) gefüllt sind und die beide an einem gemeinsamen Zwischenelement (10) angeordnet sind, das eine Durchlassvorrichtung (11) aufweist, mittels der die Kammern (7, 8) miteinander verbunden sind, wobei das Medium (9) von einer Kammer in die andere Kammer strömen kann, wobei jede der Kammern (7, 8) ein flexibles Hüllenteil (13, 15) und eines der Krafteinleitungselemente (1, 2) aufweist und wobei jeweils ein Annähern des Krafteinleitungselements (1, 2) zu dem Zwischenelement (10) und die damit einher gehende Längenänderung der jeweiligen Kammer (7, 8) eine Änderung des Innenvolumens der jeweiligen Kammer (7, 8) bewirkt, **dadurch gekennzeichnet, dass** das Verhältnis von Längenänderung zu Innenvolumenänderung bei den beiden Kammern (7, 8) unterschiedlich ist.

2. Dämpfer nach Anspruch 1, **dadurch gekennzeichnet, dass**
a. die erste Kammer (7) ein erstes rigides Hüllenteil (12) aufweist, das ein erstes der Krafteinleitungselemente (1, 2) ist, und/oder dass
b. die zweite Kammer (8) ein zweites rigides Hüllenteil (14) aufweist, das ein zweites der Krafteinleitungselemente (1, 2) ist, und/oder dass
c. die erste Kammer (7) ein erstes rigides Hüllenteil (12) aufweist, das ein erstes der Krafteinleitungselemente (1, 2) ist, wobei das rigide Hüllenteil (12, 14) als Deckel oder als Boden für den Faltenbalg ausgebildet ist, und/oder dass
d. die zweite Kammer (8) ein zweites rigides Hüllenteil (14) aufweist, das ein zweites der Krafteinleitungselemente (1, 2) ist, wobei das rigide Hüllenteil (12, 14) als Deckel oder als Boden für den Faltenbalg ausgebildet ist.

3. Dämpfer nach Anspruch 1 oder 2, **dadurch gekennzeichnet, dass** die Projektionen der dem Medium (9) zugewandten Innenflächen (16, 17) der Krafteinleitungselemente (1, 2) in Verschieberichtung der Krafteinleitungselemente (1, 2) unterschiedlich groß sind.

4. Dämpfer nach einem der Ansprüche 1 bis 3, **dadurch gekennzeichnet, dass**
a. wenigstens eines der flexiblen Hüllenteile (13, 15) als Faltenbalg mit wenigstens einer Falte, insbesondere Ringfalte, ausgebildet ist oder dass wenigstens eines der flexiblen Hüllenteile (13, 15) als zylinderförmiger, insbesondere kreiszylinderförmiger, Faltenbalg mit wenigstens einer Falte, insbesondere Ringfalte, ausgebildet ist, und/oder dass
b. beide flexiblen Hüllenteile (13, 15) jeweils als Faltenbalge ausgebildet sind, oder dass beide flexiblen Hüllenteile (13, 15) jeweils als Faltenbalge ausgebildet sind, die koaxial zueinander angeordnet sind, und/oder dass
c. beide flexiblen Hüllenteile (13, 15) jeweils als kreiszylinderförmige Faltenbalge ausgebildet sind und dass einer der Faltenbalge einen größeren Innendurchmesser aufweist, als der andere.

5. Dämpfer nach einem der Ansprüche 1 bis 4, **dadurch gekennzeichnet, dass**
a. die flexiblen Hüllenteile (13, 15) bei einer Belastung des Dämpfers mit einer äußeren Kraft ihre Form, jedoch nicht die Größe ihrer Fläche, insbesondere ihrer Innenfläche, verändern, und/oder dass
b. die flexiblen Hüllenteile (13, 15) bei einem Druckunterschied im Inneren relativ zur Außenumgebung ihre Form, jedoch nicht die Größe ihrer Fläche, insbesondere ihrer Innenfläche, verändern, und/oder dass
c. die flexiblen Hüllenteile (13, 15) gegen radiale Kräfte ausgesteift sind, und/oder dass
d. das Innenvolumen der flexiblen Hüllenteile (13, 15), insbesondere im Wesentlichen, nur in Axialrichtung veränderbar ist.

6. Dämpfer nach einem der Ansprüche 1 bis 5, **dadurch gekennzeichnet, dass**
a. die Hüllen der Kammern (7, 8), abgesehen von einer Durchlässigkeit der Durchlassvorrichtung (11), für das strömungsfähige Medium (9) undurchlässig ausgebildet sind, und/oder dass
b. jeweils das Krafteinleitungselement (1, 2) und/oder das rigide Hüllenteil (12, 14) für das strömungsfähige Medium (9) undurchlässig mit dem flexiblen Hüllenteil (13, 15) verbunden ist, und/oder dass
c. die Krafteinleitungselemente (1, 2) und/oder die rigiden Hüllenteile (12, 14) an entgegengesetzten Enden der über das Zwischenelement (10) miteinander verbundenen Kammern (7, 8) angeordnet sind oder dass die Krafteinleitungselemente (1, 2) und/oder die rigiden Hüllenteile (12, 14) einander entgegengesetzt angeordnete Enden des Dämpfers bilden, und/oder dass
d. das Medium (9) ein Gas, eine Flüssigkeit oder ein Nanofluid ist oder aus Kugeln besteht und/oder dass das Medium (9) inkompressibel ist, und/oder dass.
e. die Durchlassvorrichtung (11) einen Kanal aufweist, durch den das strömungsfähige Medium (9) von einer Kammer (7, 8) in die andere Kammer (7, 8) strömen kann, und/oder dass
f. die Durchlassvorrichtung (11) ein Ventil aufweist, und/oder dass
g. die Durchlassvorrichtung (11) strömungsrichtungsabhängig unterschiedliche Durchlasswiderstände aufweist.

7. Dämpfer nach einem der Ansprüche 1 bis 6, **dadurch gekennzeichnet, dass**
a. eine Federvorrichtung vorhanden ist, die die Krafteinleitungselemente (1, 2) und das Zwischenelement (10) relativ zueinander in eine Ausgangsstellung drängt, oder dass
b. eine Federvorrichtung vorhanden ist, die die Krafteinleitungselemente (1, 2) und das Zwischenelement (10) relativ zueinander in eine Ausgangsstellung drängt und die wenigstens teilweise, insbesondere vollständig, durch die flexiblen Hüllenteile (13, 15) gebildet ist.

8. Dämpfer nach einem der Ansprüche 1 bis 7, **dadurch gekennzeichnet, dass**
a. die Krafteinleitungselemente ausschließlich mittels der flexiblen Hüllenteile (13, 15) mit dem Zwischenelement (10) verbunden sind, und/oder dass
b. außer den flexiblen Hüllenteilen (13, 15) und/oder der Federvorrichtung kein Führungselement zum Führen der Krafteinleitungselemente (1, 2) und des Zwischenelements (10) relativ zueinander vorhanden ist.

9. Dämpfer nach einem der Ansprüche 1 bis 8, **dadurch gekennzeichnet, dass** eine der Kammern (7, 8) anstelle eines Krafteinleitungselements (1, 2) ein weiteres Zwischenelement (22) aufweist, an dem eine dritte, insbesondere vollständig, mit dem Medium (9) gefüllte Kammer (23) angeordnet ist und das eine weitere Durchlassvorrichtung (26) für das Medium (9) aufweist, wobei die dritte Kammer (23) ein drittes flexibles Hüllenteil (25) und eines der Krafteinleitungselemente (1, 2) aufweist.

10. Dämpfer nach Anspruch 9, **dadurch gekennzeichnet, dass**
a. die dritte Kammer ein drittes rigides Hüllenteil (24) aufweist, das eines der beiden Krafteinleitungselemente (1,2) bildet, und/oder dass
b. das dritte flexible Hüllenteil (25) als Faltenbalg mit wenigstens einer Falte, insbesondere Ringfalte, ausgebildet ist oder dass das dritte flexible Hüllenteil (25) als zylinderförmiger, insbesondere kreiszylinderförmiger, Faltenbalg mit wenigstens einer Falte, insbesondere Ringfalte, ausgebildet ist, und/oder dass
c. ein Annähern des Krafteinleitungselement (1, 2) der dritten Kammer (23) zu dem weiteren Zwischenelement (22) eine Änderung des Innenvolumens der dritten Kammer (23) bewirkt und dass das Verhältnis von Längenänderung zu Innenvolumenänderung bei der dritten Kammer (23) unterschiedlich ist zu dem Verhältnis von Längenänderung zu Innenvolumenänderung der zweiten Kammer (8), zu der das Zwischenelement (10) und das weitere Zwischenelement (22) gehört, und/oder gleich dem Verhältnis von Längenänderung zu Innenvolumenänderung der ersten Kammer (7), und/oder dass
d. das Krafteinleitungselement (2) der dritten Kammer (23) ausschließlich mittels des dritten flexiblen Hüllenteils (25) mit dem weiteren Zwischenelement (22) verbunden ist, und/oder dass
e. außer dem dritten flexiblen Hüllenteil (25) und/oder einer weiteren Federvorrichtung kein Führungselement zum Führen des Krafteinleitungselements (2) der dritten Kammer (23) relativ zu dem weiteren (22) Zwischenelement vorhanden ist, und/oder dass
f. an einem der Krafteinleitungselemente (1, 2) oder an dem Zwischenelement (10) ein umlaufender Kragen (28) zum radialen Abstützen eines der flexiblen Hüllenteile angeordnet ist.

11. Dämpfer nach Anspruch 9 oder 10, **dadurch gekennzeichnet, dass** das Krafteinleitungselement (1, 2) der dritten Kammer (23) und/oder das dritte rigide Hüllenteil (24) eine dem Medium (9) der dritten Kammer (23) zugewandte Innenfläche (27) aufweist, deren Projektion auf eine Ebene senkrecht zur Verschieberichtung der Krafteinleitungselemente (1, 2) kleiner ist, als die Projektion auf eine Ebene senkrecht zur Verschieberichtung der Krafteinleitungselemente (1, 2) der dem Medium (9) der zweiten Kammer (8) zugewandten Innenfläche des weiteren Zwischenelements (22).

12. Dämpfer nach einem der Ansprüche 9 bis 11, **dadurch gekennzeichnet, dass**
a. eine weitere Federvorrichtung vorhanden ist, die das Krafteinleitungselement und das weitere Zwischenelement (22) relativ zueinander in eine weitere Ausgangsstellung drängt, oder dass
b. eine weitere Federvorrichtung vorhanden ist, die das Krafteinleitungselement und das weitere Zwischenelement (22) relativ zueinander in eine weitere Ausgangsstellung drängt und die wenigstens teilweise, insbesondere vollständig, durch das dritte flexiblen Hüllenteil (25) gebildet ist.

13. Dämpfer nach einem der Ansprüche 9 bis 12, **dadurch gekennzeichnet, dass**
a. das dritte flexible Hüllenteil (25) bei einer Belastung des Dämpfers mit einer äußeren Kraft seine Form, jedoch nicht die Größe seiner Fläche, insbesondere seiner Innenfläche, verändert, und/oder dass
b. das dritte flexible Hüllenteil (25) bei einem Druckunterschied im Inneren der Kammer relativ zur Außenumgebung seine Form, jedoch nicht die Größe seiner Fläche, insbesondere seiner Innenfläche, verändert, und/oder dass
c. das dritte flexible Hüllenteil (25) gegen radiale Kräfte ausgesteift ist, und/oder dass
d. das Innenvolumen des dritten flexiblen Hüllenteils (25), insbesondere im Wesentlichen, nur in Axialrichtung veränderbar ist.

14. Dämpfer nach einem der Ansprüche 1 bis 13, **dadurch gekennzeichnet, dass**
a. der Dämpfer dazu ausgelegt ist, derart eingespannt zu werden, dass auf die beiden äußeren Krafteinleitungselemente (1, 2) entgegengesetzte und aufeinander zu gerichtete Kräfte (5, 6) wirken und/oder dass
b. der Dämpfer dazu ausgelegt ist, gelängt zu werden, wobei auf die beiden äußeren Krafteinleitungselemente (1, 2) entgegengesetzte und voneinander weg gerichtete Kräfte (3, 4) wirken, und/oder dass,
c. der Dämpfer als Schwingungsdämpfer für eine Radaufhängung eines Fahrzeugs, insbesondere eines Kraftfahrzeuges, ausgebildet ist und/oder dass
d. der Dämpfer als Schwingungsdämpfer zum Dämpfen der Schwingungen einer Maschine, insbesondere eines Verbrennungsmotors, ausgebildet ist und/oder dass
e. der Dämpfer als Bremse für eine Schulbade oder eine Tür ausgebildet ist.

15. Möbelstück oder Fahrzeug, insbesondere Kraftfahrzeug, das wenigstens einen Dämpfer nach einem der Ansprüche 1 bis 14 aufweist.

## Claims

1. Damper, in particular vibration damper, which has two force introduction elements (1, 2) which, when acted on by external, oppositely directed forces (3, 4, 5, 6), move towards one another or move away from one another, wherein
the damper has a first and a second chamber (7, 8), whose filling volume is able to be changed and which are both filled, in particular completely, with a flowable medium (9) and which are both arranged on a common intermediate element (10) having a passage device (11) by means of which the chambers (7, 8) are connected to one another, wherein the medium (9) can flow from one chamber into the other chamber, wherein each of the chambers (7, 8) has a flexible sleeve part (13, 15) and one of the force introduction elements (1, 2), and wherein in each case an approach of the force introduction element (1, 2) to the intermediate element (10) and the accompanying change in length of the respective chamber (7, 8) brings about a change in the internal volume of the respective chamber (7, 8), **characterized in that**
the ratio of change in length to change in internal volume is different for the two chambers (7, 8).

2. Damper according to Claim 1, **characterized in that**
a. the first chamber (7) has a first rigid sleeve part (12), which is a first one of the force introduction elements (1, 2), and/or **in that**
b. the second chamber (8) has a second rigid sleeve part (14), which is a second one of the force introduction elements (1, 2), and/or **in that**
c. the first chamber (7) has a first rigid sleeve part (12), which is a first one of the force introduction elements (1, 2), wherein the rigid sleeve part (12, 14) is in the form of a cover, or in the form of a base, for the corrugated bellows, and/or **in that**
d. the second chamber (8) has a second rigid sleeve part (14), which is a second one of the force introduction elements (1, 2), wherein the rigid sleeve part (12, 14) is in the form of a cover, or in the form of a base, for the corrugated bellows.

3. Damper according to Claim 1 or 2, **characterized in that** the projections of the internal surfaces (16, 17), facing the medium (9), of the force introduction elements (1, 2) in a displacement direction of the force introduction elements (1, 2) are of different size.

4. Damper according to one of Claims 1 to 3, **characterized in that**
a. at least one of the flexible sleeve parts (13, 15) is in the form of a corrugated bellows having at least one fold, in particular ring-shaped fold, or **in that** at least one of the flexible sleeve parts (13, 15) is in the form of a cylindrical, in particular circular cylindrical, corrugated bellows having at least one fold, in particular ring-shaped fold, and/or **in that**
b. both flexible sleeve parts (13, 15) are each in the form of a corrugated bellows, or **in that** both flexible sleeve parts (13, 15) are each in the form of a corrugated bellows, which are arranged coaxially with one another, and/or **in that**
c. both flexible sleeve parts (13, 15) are each in the form of circular cylindrical corrugated bellows, and **in that** one of the corrugated bellows has a larger internal diameter than the other one.

5. Damper according to one of Claims 1 to 4, **characterized in that**
a. the flexible sleeve parts (13, 15) change their shape, but not the size of their surface, in particular their internal surface, when the damper is loaded by an external force, and/or in that
b. the flexible sleeve parts (13, 15) change their shape, but not the size of their surface, in particular their internal surface, when there is a pressure difference in the interior relative to the external surroundings, and/or in that
c. the flexible sleeve parts (13, 15) are stiffened with respect to radial forces, and/or in that
d. the internal volume of the flexible sleeve parts (13, 15) is able to be changed, in particular substantially only, in an axial direction.

6. Damper according to one of Claims 1 to 5, **characterized in that**
a. the sleeves of the chambers (7, 8), apart from a permeability of the passage device (11), are formed so as to be impermeable to the flowable medium (9), and/or **in that**
b. in each case the force introduction element (1, 2) and/or the rigid sleeve part (12, 14) are/is connected to the flexible sleeve part (13, 15) so as to be impermeable to the flowable medium (9), and/or **in that**
c. the force introduction elements (1, 2) and/or the rigid sleeve parts (12, 14) are arranged at opposite ends of the chambers (7, 8), which are connected to one another via the intermediate element (10), or **in that** the force introduction elements (1, 2) and/or the rigid sleeve parts (12, 14) form ends of the damper which are arranged opposite one another, and/or **in that**
d. the medium (9) is a gas, a liquid or a nanofluid or consists of spheres, and/or **in that** the medium (9) is incompressible, and/or in that
e. the passage device (11) has a channel through which the flowable medium (9) can flow from one chamber (7, 8) into the other chamber (7, 8), and/or **in that**
f. the passage device (11) has a valve, and/or **in that**
g. the passage device (11) has passage resistances which differ in a manner dependent on flow direction.

7. Damper according to one of Claims 1 to 6, **characterized in that**
a. a spring device which forces the force introduction elements (1, 2) and the intermediate element (10) into a starting position relative to one another is present, or in that
b. a spring device which forces the force introduction elements (1, 2) and the intermediate element (10) into a starting position relative to one another and which is formed at least partially, in particular completely, by the flexible sleeve parts (13, 15) is present.

8. Damper according to one of Claims 1 to 7, **characterized in that**
a. the force introduction elements are connected to the intermediate element (10) exclusively by means of the flexible sleeve parts (13, 15), and/or **in that**,
b. apart from the flexible sleeve parts (13, 15) and/or the spring device, no guide element for guiding the force introduction elements (1, 2) and the intermediate element (10) relative to one another is present.

9. Damper according to one of Claims 1 to 8, **characterized in that** one of the chambers (7, 8) has, instead of a force introduction element (1, 2), a further intermediate element (22), on which a third chamber (23), which is filled, in particular completely, with the medium (9), is arranged and which has a further passage device (26) for the medium (9), wherein the third chamber (23) has a third flexible sleeve part (25) and one of the force introduction elements (1, 2).

10. Damper according to Claim 9, **characterized in that**
a. the third chamber has a third rigid sleeve part (24), which forms one of the two force introduction elements (1, 2), and/or **in that**
b. the third flexible sleeve part (25) is in the form of a corrugated bellows having at least one fold, in particular ring-shaped fold, or **in that** the third flexible sleeve part (25) is in the form of a cylindrical, in particular circular cylindrical, corrugated bellows having at least one fold, in particular ring-shaped fold, and/or **in that**
c. an approach of the force introduction element (1, 2) of the third chamber (23) to the further intermediate element (22) brings about a change in the internal volume of the third chamber (23), and **in that** the ratio of change in length to change in internal volume for the third chamber (23) is different from the ratio of change in length to change in internal volume for the second chamber (8), to which the intermediate element (10) and the further intermediate element (22) belong, and/or is equal to the ratio of change in length to change in internal volume for the first chamber (7), and/or **in that**
d. the force introduction element (2) of the third chamber (23) is connected to the further intermediate element (22) exclusively by means of the third flexible sleeve part (25), and/or in that,
e. apart from the third flexible sleeve part (25) and/or a further spring device, no guide element for guiding the force introduction element (2) of the third chamber (23) relative to the further intermediate element (22) is present, and/or **in that**
f. a peripheral collar (28) for radially supporting one of the flexible sleeve parts is arranged on one of the force introduction elements (1, 2) or on the intermediate element (10) .

11. Damper according to Claim 9 or 10, **characterized in that** the force introduction element (1, 2) of the third chamber (23) and/or the third rigid sleeve part (24) have/has an internal surface (27) which faces the medium (9) of the third chamber (23) and whose projection onto a plane perpendicular to the displacement direction of the force introduction elements (1, 2) is smaller than the projection onto a plane perpendicular to the displacement direction of the force introduction elements (1, 2) of the internal surface, facing the medium (9) of the second chamber (8), of the further intermediate element (22).

12. Damper according to one of Claims 9 to 11, **characterized in that**
a. a further spring device which forces the force introduction element and the further intermediate element (22) into a further starting position relative to one another is present, or **in that**
b. a further spring device which forces the force introduction element and the further intermediate element (22) into a further starting position relative to one another and which is formed at least partially, in particular completely, by the third flexible sleeve part (25) is present.

13. Damper according to one of Claims 9 to 12, **characterized in that**
a. the third flexible sleeve part (25) changes its shape, but not the size of its surface, in particular its internal surface, when the damper is loaded by an external force, and/or in that
b. the third flexible sleeve part (25) changes its shape, but not the size of its surface, in particular its internal surface, when there is a pressure difference in the interior of the chamber relative to the external surroundings, and/or **in that**
c. the third flexible sleeve part (25) is stiffened with respect to radial forces, and/or in that
d. the internal volume of the third flexible sleeve part (25) is able to be changed, in particular substantially, only in an axial direction.

14. Damper according to one of Claims 1 to 13, **characterized in that**
a. the damper is designed to be compressed in such a way that opposing forces (5, 6) which are directed towards one another act on the two external force introduction elements (1, 2), and/or **in that**
b. the damper is designed to be extended, wherein opposing forces (3, 4) which are directed away from one another act on the two external force introduction elements (1, 2), and/or **in that**
c. the damper is in the form of a vibration damper for a wheel suspension of a vehicle, in particular a motor vehicle, and/or **in that**
d. the damper is in the form of a vibration damper for damping the vibrations of a machine, in particular an internal combustion engine, and/or **in that**
e. the damper is in the form of a brake for a drawer or a door.

15. Item of furniture or vehicle, in particular motor vehicle, which has at least one damper according to one of Claims 1 to 14.

## Revendications

1. Amortisseur, en particulier amortisseur de vibrations, lequel comporte deux éléments d'entrée de force (1, 2), lesquels peuvent se mouvoir l'un vers l'autre ou s'éloigner l'un de l'autre par l'action de forces extérieures dirigées dans des directions opposées (3, 4, 5, 6), dans lequel l'amortisseur comporte un premier et un deuxième compartiment (7, 8), dont le volume de remplissage est variable et les deux sont remplis, en particulier complètement, d'un milieu fluide (9) et les deux sont agencés à un élément intermédiaire (10) commun, comportant un dispositif de passage (11), au moyen duquel les compartiments (7, 8) sont reliés l'un à l'autre de telle manière, dans lequel le milieu (9) peut s'écouler d'un compartiment à l'autre, dans lequel chacun des compartiments (7, 8) comporte une partie d'enveloppe flexible (13, 15) et un des éléments d'entrée de force (1, 2) et dans lequel une approche de l'élément d'entrée de force (1, 2) respectif vers l'élément intermédiaire (10), et la variation de longueur du compartiment respectif (7, 8) qu'elle implique, opère une variation du volume intérieur du compartiment respectif (7, 8), **caractérisé en ce que** le rapport de la variation de longueur à la variation de volume intérieur est différent pour les deux compartiments (7, 8).

2. Amortisseur selon la revendication 1, **caractérisé en ce que**
a. le premier compartiment (7) comporte une première partie d'enveloppe rigide (12), laquelle est un premier élément d'entrée de force (1, 2), et/ou **en ce que**
b. le deuxième compartiment (8) comporte une deuxième partie d'enveloppe rigide (14), laquelle est un deuxième élément d'entrée de force (1, 2), et/ou **en ce que**
c. le premier compartiment (7) comporte une première partie d'enveloppe rigide (12), laquelle est un premier élément d'entrée de force (1, 2), dans lequel la partie d'enveloppe rigide (12, 14) est réalisée comme couvercle ou comme fond pour le soufflet pliant, et/ou **en ce que**
d. le deuxième compartiment (8) comporte une deuxième partie d'enveloppe rigide (14), laquelle est un deuxième élément d'entrée de force (1, 2), dans lequel la partie d'enveloppe rigide (12, 14) est réalisée comme couvercle ou comme fond pour le soufflet pliant.

3. Amortisseur selon la revendication 1 ou 2, **caractérisé en ce que** les projections des surfaces intérieures (16, 17) faisant face au milieu (9) des éléments d'entrée de force (1, 2) sont de tailles différentes dans la direction de coulissement des éléments d'entrée de force (1, 2).

4. Amortisseur selon l'une des revendications 1 à 3, **caractérisé en ce que**
a. au moins une des parties d'enveloppe flexibles (13, 15) est réalisée comme soufflet pliant doté d'au moins un pli, en particulier un pli annulaire, ou **en ce qu'**au moins une des parties d'enveloppe flexibles (13, 15) est réalisée comme soufflet pliant en forme de cylindre, en particulier de cylindre circulaire, doté d'au moins un pli, en particulier un pli annulaire, et/ou **en ce que**
b. les deux parties d'enveloppe flexibles (13, 15) sont réalisées respectivement comme soufflets pliants, ou **en ce que** les deux parties d'enveloppe flexibles (13, 15) sont réalisées respectivement comme soufflets pliants agencés de manière coaxiale l'un par rapport à l'autre, et/ou **en ce que**
c. les deux parties d'enveloppe flexibles (13, 15) sont réalisées respectivement comme soufflets pliants en forme de cylindre circulaire et **en ce qu'**un des soufflets pliants possède un diamètre intérieur supérieur à celui de l'autre.

5. Amortisseur selon l'une des revendications 1 à 4, **caractérisé en ce que**
a. les parties d'enveloppe flexibles (13, 15) varient leur forme, mais pas la taille de leur surface, en particulier de leur surface intérieure lors d'une charge de l'amortisseur avec une force extérieure, et/ou **en ce que**
b. les parties d'enveloppe flexibles (13, 15) varient leur forme, mais pas la taille de leur surface, en particulier de leur surface intérieure lors d'une différence de pression à l'intérieur par rapport à l'environnement extérieur, et/ou **en ce que**
c. les parties d'enveloppe flexibles (13, 15) sont raidies contre les forces radiales, et/ou **en ce que**
d. le volume intérieur des parties d'enveloppe flexibles (13, 15) n'est variable que dans la direction axiale, en particulier sensiblement.

6. Amortisseur selon l'une des revendications 1 à 5, **caractérisé en ce que**
a. les enveloppes des compartiments (7, 8) sont réalisées comme étanches pour le milieu fluide (9), exception d'une perméabilité du dispositif de passage (11), et/ou **en ce que**
b. l'élément d'entrée de force (1, 2) et/ou la partie d'enveloppe rigide (12, 14) est respectivement reliée à la partie d'enveloppe flexible (13, 15) de manière étanche pour le milieu fluide (9), et/ou **en ce que**
c. les éléments d'entrée de force (1, 2) et/ou les parties d'enveloppe rigide (12, 14) sont agencés à des extrémités opposées des compartiments (7, 8) reliés l'un à l'autre par le biais de l'élément intermédiaire (10) ou **en ce que** les éléments d'entrée de force (1, 2) et/ou les parties d'enveloppe rigide (12, 14) forment des extrémités opposées l'une à l'autre de l'amortisseur, et/ou en ce que
d. le milieu (9) est un gaz, un liquide ou un nanofluide ou est constitué de billes et/ou **en ce que** le milieu (9) est incompressible, et/ou **en ce que**
e. le dispositif de passage (11) comporte un canal, par lequel le milieu fluide (9) peut s'écouler d'un compartiment (7, 8) vers l'autre compartiment (7, 8), et/ou **en ce que**
f. le dispositif de passage (11) comporte une vanne, et/ou **en ce que**
g. le dispositif de passage (11) possède une résistance à l'état passant différente en fonction du sens de l'écoulement.

7. Amortisseur selon l'une des revendications 1 à 6, **caractérisé en ce que**
a. un dispositif de ressort est présent, lequel pousse les éléments d'entrée de force (1, 2) et l'élément intermédiaire (10) relativement l'un à l'autre dans une position initiale, ou **en ce que**
b. un dispositif de ressort est présent, lequel pousse les éléments d'entrée de force (1, 2) et l'élément intermédiaire (10) relativement l'un à l'autre dans une position initiale et est formé au moins partiellement, en particulier entièrement, par les parties d'enveloppe flexibles (13, 15).

8. Amortisseur selon l'une des revendications 1 à 7, **caractérisé en ce que**
a. les éléments d'entrée de force sont reliés à l'élément intermédiaire (10) exclusivement au moyen des parties d'enveloppe flexibles (13, 15), et/ou **en ce que**
b. hormis les parties d'enveloppe flexibles (13, 15) et/ou le dispositif de ressort, aucun élément de guidage n'est présent pour guider les éléments d'entrée de force (1, 2) et l'élément intermédiaire (10) relativement l'un à l'autre.

9. Amortisseur selon l'une des revendications 1 à 8, **caractérisé en ce qu'**un des compartiments (7, 8) comporte un élément intermédiaire (22) supplémentaire à la place d'un élément d'entrée de force (1, 2), auquel un troisième compartiment (23) rempli du milieu (9), en particulier complètement, est agencé et celui-ci comporte un dispositif de passage supplémentaire (26) pour le milieu (9), dans lequel le troisième compartiment (23) comporte une troisième partie d'enveloppe flexible (25) et l'un des éléments d'entrée de force (1, 2).

10. Amortisseur selon la revendication 9, **caractérisé en ce que**
a. le troisième compartiment comporte une troisième partie d'enveloppe rigide (24), laquelle forme un des deux éléments d'entrée de force (1, 2), et/ou **en ce que**
b. la troisième partie d'enveloppe flexible (25) est réalisée comme soufflet pliant doté d'au moins un pli, en particulier un pli annulaire, ou **en ce que** la troisième partie d'enveloppe flexible (25) est réalisée comme soufflet pliant en forme de cylindre, en particulier de cylindre circulaire, doté d'au moins un pli, en particulier un pli annulaire, et/ou **en ce que**
c. une approche de l'élément d'entrée de force (1, 2) du troisième compartiment (23) vers l'élément intermédiaire supplémentaire (22) opère une variation du volume intérieur du troisième compartiment (23) et **en ce que** le rapport de la variation de longueur à la variation de volume intérieur pour le troisième compartiment (23) est différent du rapport de la variation de longueur à la variation de volume intérieur du deuxième compartiment (8), auquel l'élément intermédiaire (10) et l'élément intermédiaire supplémentaire (22) appartient, et/ou identique au rapport de la variation de longueur à la variation de volume intérieur du premier compartiment (7), et/ou **en ce que**
d. l'élément d'entrée de force (2) du troisième compartiment (23) est relié à l'élément intermédiaire supplémentaire (22) exclusivement au moyen de la troisième partie d'enveloppe flexible (25), et/ou **en ce que**
e. hormis la partie d'enveloppe flexible supplémentaire (25) et/ou un dispositif de ressort supplémentaire aucun élément de guidage n'est présent pour guider l'élément d'entrée de force (2) du troisième compartiment (23) relativement à l'élément intermédiaire supplémentaire (22), et/ou en ce que
f. une collerette périphérique (28) est agencée à un des éléments d'entrée de force (1, 2) ou à l'élément intermédiaire (10) pour soutenir radialement les parties d'enveloppe flexibles.

11. Amortisseur selon la revendication 9 ou 10, **caractérisé en ce que** l'élément d'entrée de force (1, 2) du troisième compartiment (23) et/ou la troisième partie d'enveloppe rigide (24) comporte une surface intérieure (27) faisant face au milieu (9) du troisième compartiment (23), dont la projection sur un plan perpendiculaire à la direction de coulissement des éléments d'entrée de force (1, 2) est plus petite que la projection de la surface intérieure du deuxième élément intermédiaire (22) faisant face au milieu (9) du deuxième compartiment (8) sur un plan perpendiculaire à la direction de coulissement des éléments d'entrée de force (1, 2).

12. Amortisseur selon l'une des revendications 9 à 11, **caractérisé en ce que**
a. un dispositif de ressort supplémentaire est présent, lequel pousse l'élément d'entrée de force et l'élément intermédiaire supplémentaire (22) relativement l'un à l'autre dans une position initiale supplémentaire, ou **en ce que**
b. un dispositif de ressort supplémentaire est présent, lequel pousse l'élément d'entrée de force et l'élément intermédiaire supplémentaire (22) relativement l'un à l'autre dans une position initiale supplémentaire et est formé au moins partiellement, en particulier entièrement, par la troisième partie d'enveloppe flexible (25).

13. Amortisseur selon l'une des revendications 9 à 12, **caractérisé en ce que**
a. la troisième partie d'enveloppe flexible (25) varie sa forme, mais pas la taille de sa surface, en particulier de sa surface intérieure lors d'une charge de l'amortisseur avec une force extérieure, et/ou **en ce que**
b. la troisième partie d'enveloppe flexible (25) varie sa forme, mais pas la taille de sa surface, en particulier de sa surface intérieure lors d'une différence de pression à l'intérieur du compartiment par rapport à l'environnement extérieur, et/ou **en ce que**
c. la troisième partie d'enveloppe flexible (25) est raidie contre les forces radiales, et/ou **en ce que**
d. le volume intérieur de la troisième partie d'enveloppe flexible (25) n'est variable que dans la direction axiale, en particulier sensiblement.

14. Amortisseur selon l'une des revendications 1 à 13, **caractérisé en ce que**
a. l'amortisseur est disposé de façon à être serré de telle sorte que des forces (5, 6) opposées et dirigées l'une vers l'autre s'exercent sur les deux éléments d'entrée de force extérieurs (1, 2) et/ou **en ce que**
b. l'amortisseur est disposé de façon à être étiré, dans lequel des forces (3, 4) opposées et dirigées s'éloignant l'une de l'autre s'exercent sur les deux éléments d'entrée de force extérieurs (1, 2) et/ou **en ce que**
c. l'amortisseur est réalisé comme amortisseur de vibrations pour une suspension de roue d'un véhicule, en particulier d'un véhicule à moteur, et/ou **en ce que**
d. l'amortisseur est réalisé comme amortisseur de vibrations pour amortir les vibrations d'une machine, en particulier d'un moteur à combustion, et/ou **en ce que**
e. l'amortisseur est réalisé comme frein pour un tiroir ou une porte.

15. Pièce de mobilier ou véhicule, en particulier véhicule à moteur, comportant au moins un amortisseur selon l'une des revendications 1 à 14.
